# EUROPÄISCHE PATENTSCHRIFT

(11) **EP 0 563 429 B1**
(45) Veröffentlichungstag und Bekanntmachung des Hinweises auf die Patenterteilung: **28.09.1994**
(21) Anmeldenummer: 92105806.1
(22) Anmeldetag: 03.04.1992
(51) Int. Cl.: B65H 54/10, H02K 15/04, H02K 15/08

(54) **Wickelvorrichtung zum mehrdrähtigen Bewickeln eines Gegenstandes**
Multiwire winding device for winding an object
Dispositif d'enroulement multifilaire pour enrouler un objet

(43) Veröffentlichungstag der Anmeldung: 06.10.1993
(73) Patentinhaber: SIEMENS AKTIENGESELLSCHAFT, 80333 München (DE)
(72) Erfinder: Stralka, Herbert, W-8740 Bad Neustadt/S (DE)

(56) Entgegenhaltungen:
- EP-A- 0 369 237
- DE-A- 1 665 295
- DE-A- 2 053 957
- DE-A- 2 915 840
- FR-A- 1 285 954
- FR-A- 1 312 136
- PATENT ABSTRACTS OF JAPAN vol. 2, no. 40 (E), 16 März 1978; & JP-A-53 004801

## Beschreibung

Die Erfindung betrifft eine Wickelvorrichtung zum mehrdrähtigen Bewickeln eines Gegenstandes gemäß dem Oberbegriff des Anspruchs 1.

Durch die DE-PS 29 15 840 ist eine solche Wickelvorrichtung bekannt. Zur Vermeidung des Verdrillens der Drähte sind bei dieser Wickelvorrichtung mehrere drehbar angeordnete Drahtmagazine vorgesehen. Um diese Drahtmagazine läuft ein mit dem Flyer gekoppelter Hilfsarm um und zieht die Drähte von den Drahtmagazinen ab. Dabei werden die Drahtmagazine jeweils in Drehbewegung versetzt. Wegen der relativ großen Masse dieser Magazine sind entsprechend hohe Beschleunigungskräfte erforderlich, die von den Drähten auf die Drahtmagazine übertragen werden müssen. Mit einer derartigen Vorrichtung ist ein Bewickeln in entgegengesetzten Wickelrichtungen nur schwer durchführbar. Wegen der durch die unterschiedlichen Wickelrichtungen bedingten unterschiedlichen Drehzahl der Drahtmagazine müssen entsprechende Vorkehrungen zum jeweiligen Abbremsen der Magazine von der hohen auf die niedere Drehzahl vorgesehen werden.

Durch die FR-A-2 111 501 bzw. durch die dieser Schrift entsprechende DE-A-20 53 957 ist ferner eine Vorrichtung zum Umspinnen eines strangförmigen Gutes mit einem band- oder fadenförmigen Material bekannt. Bei dieser Vorrichtung ist ein freilaufender rotierender, das band- bzw. fadenförmige Material vorübergehend aufnehmender Speicher vorgesehen. Von diesem Speicher wird das Material von einem abschnittsweise mit wechselnder Drehrichtung laufenden Spinner abgezogen und auf das strangförmige Gut aufgewickelt. In der einen Wickelrichtung des Spinners wird der Speicher durch das band- bzw. fadenförmige Material mitgenommen und infolgedessen Material auf den Speicher aufgewickelt. Läuft der Spinner in der anderen Wickelrichtung, dann wird das auf den Speicher aufgewickelte Material wieder abgewickelt. Da die hierbei abgewickelte Länge des Materials größer als die gleichzeitig auf das strangförmige Gut aufgewickelte Länge ist, muß ein Zusatzspeicher vorgesehen werden, der die Differenzlänge des Materials aufnimmt.

Der Erfindung liegt die Aufgabe zugrunde, eine Wickelvorrichtung zum mehrdrähtigen Bewickeln von Gegenständen zu schaffen, mit der ein Bewickeln bei wechselnden Wickelrichtungen ohne einen Zusatzspeicher möglich ist und bei der die auf die Drähte wirkenden Kräfte möglichst niedrig sind.

Die Lösung der gestellten Aufgabe gelingt durch die im Kennzeichen des Anspruchs 1 angegebenen Merkmale. Mit Hilfe der Zwischentrommel kann für die jeweilige Wickelrichtung jeweils eine ausreichende Drahtwindungszahl zur Verfügung gestellt werden. Während der einen Wickelrichtung, bei der die Drehrichtung des Hilfsarmes mit der Drehrichtung der stets in der gleichen Richtung drehenden Zwischentrommel übereinstimmt, wird die Zwischentrommel durch den Drahtzug stärker beschleunigt und es werden dadurch mehr Drahtwindungen auf die Zwischentrommel aufgewickelt, als von dieser abgezogen werden. Bei der entgegengesetzten Wickelrichtung drehen der Hilfsarm und die Zwischentrommel gegeneinander, so daß durch den Hilfsarm mehr Drahtwindungen von der Zwischentrommel abgezogen als gleichzeitig aufgewickelt werden. Damit pendelt die auf der Zwischentrommel vorhandene Drahtmenge zwischen einem oberen und einem unteren Wert. Die Zwischentrommel selbst kann in ihren Abmessungen relativ klein gehalten werden, so daß beim Abziehen des Drahtes keine hohen Massenbeschleunigungskräfte notwendig sind. Das Abbremsen der Zwischentrommel bei dem Wechsel von der hohen auf die niedere Drehzahl kann durch die im Zuführweg der Drähte ohnehin vorhandene Drahtbremse erfolgen.

Ein selbsttätiges axiales Verschieben der Drähte auf der Zwischentrommel unter der Einwirkung des Drahtzuges wird mit den Merkmalen des Anspruchs 2 erreicht.

Durch die axial gestaffelte Anordnung der Eintrittsstellen für die einzelnen Drähte an der Umlenkeinrichtung des Hilfsarmes wird ein den nebeneinanderliegenden Drahtlagen entsprechendes exakt radiales Abziehen der Drähte von der Zwischentrommel erreicht. Bestehen die Umlenkstellen aus drehbar gelagerten Umlenkrollen, so wird die axial gestaffelte Anordnung der Eintrittsstellen der Drähte in die Umlenkeinrichtung durch eine entsprechende Staffelung der Durchmesser der einzelnen Umlenkrollen erreicht. Zur Vermeidung von Unwuchten ist es zweckmäßig zwei oder mehr Hilfsarme gleichmäßig über 360° verteilt anzuordnen. Dementsprechend können auch die Aufwickelstellen verteilt angeordnet werden.

Eine konstruktiv kompakte Ausführung der Wickelvorrichtung läßt sich gemäß den Merkmalen des Anspruchs 6 erzielen.

Aufwendige konstruktive Umgestaltungen der Grundausführung einer Wickelvorrichtung lassen sich mit der im Anspruch 7 beschriebenen Ausführungsform vermeiden. Eine solche nach dem Baukastenprinzip gestaltete Ausführungsform eignet sich insbesondere zum nachträglichen Anbau an eine bereits in der Grundausführung vorhandene Wickelvorrichtung. Außerdem können mehrere Wellenteile hintereinander angeordnet und mit der Drehwelle des Flyers verbunden werden.

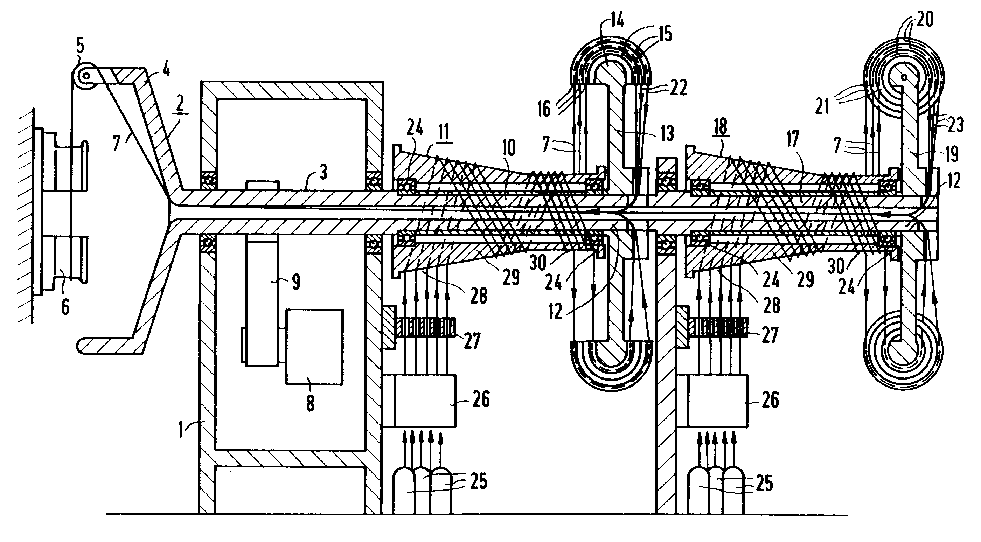

Anhand eines in der Zeichnung dargestellten Ausführungsbeispieles wird der Anmeldungsgegenstand nachfolgend näher erläutert.

Mit 1 ist das Gehäuse einer Wickelvorrichtung bezeichnet, in dem ein Flyer 2 mit einer hohl ausgebildeten Drehwelle 3 gelagert ist. Am freien Ende des einen Flyerarmes 4 ist eine Drahtführungsrolle 5 drehbar gelagert, welcher durch die hohl ausgebildete Drehwelle 3 Drähte 7 zugeführt werden. Durch die Drahtführungsrolle 5 werden die beispielsweise auf eine feststehende Wickelschablone 6 aufzuwickelnden Drähte 7 beim Bewickeln der Wickelschablone 6 entsprechend geführt. Der Antrieb des Flyers 2 erfolgt mittels eines im Gehäuse 1 eingebauten Antriebsmotors 8, der über einen Riementrieb 9 mit der Drehwelle 3 gekoppelt ist.

Bei dem gezeigten Ausführungsbeispiel ist die Drehwelle 3 des Flyers 2 auf der dem Flyer 2 gegenüberliegenden Gehäuseseite über das Gehäuse hinaus verlängert. Auf einem ersten Verlängerungsstück 10 der Drehwelle 3 ist eine Zwischentrommel 11 mittels zwei Wälzlagern 24 gegenüber der Drehwelle 3 frei drehbar gelagert. An einem die Zwischentrommel 11 axial überragenden Teil 12 des ersten Verlängerungsstückes 10 sind zwei sich gegenüber dem Verlängerungsstück 10 nach radial außen erstreckende Hilfsarme 13 drehfest angeordnet. Die Hilfsarme 13 liegen einander gegenüber, so daß Unwuchten möglichst vermieden werden. Es besteht auch die Möglichkeit noch mehr Hilfsarme 13, z.B. drei, gleichmäßig über 360° verteilt vorzusehen. Am radial außenliegenden freien Ende 14 jedes Hilfsarmes 13 ist eine aus mehreren kreisbogenförmigen Umlenkbahnen 15 bestehende Umlenkvorrichtung angeordnet. Die einzelnen Umlenkbahnen 15 sind mit unterschiedlich großen Durchmessern ausgeführt, so daß sich für die Drähte 7 eine axial gestaffelte Anordnung der Eintrittsstellen 16 in die Umlenkeinrichtung ergibt. Die axiale Lage der Eintrittsstellen 16 entspricht damit der axialen Lage jedes Drahtes 7 auf der Zwischentrommel 11, so daß die Drähte 7 exakt radial von der Zwischentrommel 11 abgezogen werden können.

Ist eine große Anzahl von Drähten 7 gleichzeitig zu wickeln, so ist es zweckmäßig, die Drehwelle 3 um ein zweites Verlängerungsteil 17 zu verlängern und auf diesem eine weitere Zwischentrommel 18 und weitere Hilfsarme 19 anzuordnen. Damit kann die über jede Zwischentrommel 11 bzw.18 und jeden Hilfsarm 13 bzw.19 geführte Anzahl von Drähten 7 so gewählt werden, daß es zu keinen Überkreuzungen der Drähte 7 auf den Zwischentrommeln 11 und 18 kommt.

An den weiteren Hilfsarmen 19 ist eine andere Ausführungsform der Umlenkvorrichtung vorgesehen. Die Umlenkung der Drähte 7 wird hier durch drehbar am Hilfsarm 19 gelagerte Umlenkrollen 20 vorgenommen. Die einzelnen Umlenkrollen 20 sind hinsichtlich ihres Durchmessers derart abgestuft, daß sich wieder eine axial gestaffelte Anordnung der Eintrittsstellen 21 ergibt, durch die ein exaktes radiales Abziehen der einzelnen Drähte 7 von der weiteren Zwischentrommel gewährleistet ist.

Von der Austrittsseite 22 bzw.23 der Umlenkbahnen 15 bzw. der Umlenkrollen 20 werden die Drähte 7 in den Hohlraum der Drehwelle 3 geführt und gelangen von dort, wie bereits erwähnt, zu der Drahtführungsrolle 5.

Die Zuführung der Drähte 7 zur jeweiligen Zwischentrommel 11 bzw.18 erfolgt aus feststehenden Drahtkübeln 25. Die Drähte 7 laufen dabei über eine Drahtbremse 26 und durch Einlaufdüsen 27. Über die Einlaufdüsen 27 gelangen die Drähte 7 zu der Aufwickelstelle 28 auf der Zwischentrommel 11 bzw.18. Die Trommelnabe 29 der Zwischentrommel 11 bzw.18 weist einen von der Aufwickelstelle 28 zu der radial unterhalb der Einlaufstellen 16 bzw.21 der Umlenkbahnen 15 bzw. Umlenkrollen 20 liegenden Abwickelstelle 30 hin abfallenden konischen Verlauf auf. Durch diesen konischen Verlauf wird infolge der auf die Drähte 7 wirkenden Zugkraft eine axiale Verschiebung der Drähte 7 von der Aufwickelstelle 28 zur Abwickelstelle 30 hin bewirkt. Da die Drähte 7 infolge der stets wirksamen Zugkraft eng an der Trommelnabe 29 anliegen, kommt es zu keinen Überkreuzungen der Drähte 7.

Außerdem ist durch die entsprechende Bemessung der Zwischentrommel 11 an der Abwickelstelle sichergestellt, daß die Zwischentrommel 11 unabhängig von der Drehrichtung des jeweiligen Hilfsarmes 13 bzw.19 immer in der gleichen Richtung dreht. Damit kann durch den Hilfsarm 13 bzw.19 keine größere als die tatsächlich benötigte Drahtlänge von der Zwischentrommel 11 abgewickelt werden.

Dadurch, daß die Drähte 7 über die mit dem Flyer 2 synchron rotierenden Hilfsarme 13 und 19 geführt werden, wird ein Verdrillen verhindert, da die gegenseitige Lage der Drähte 7 stets gleichbleibt. Mittels der Zwischentrommel 11 bzw.18 wird die Drahtzufuhr auch bei wechselnden Wickelrichtungen des Flyers 2 sichergestellt.

## Patentansprüche

1. Wickelvorrichtung zum mehrdrähtigen Bewickeln eines Gegenstandes, bei welcher Vorrichtung die Drähte (7) verdrillungsfrei einem um den feststehenden Gegenstand (6) umlaufenden Flyer (2) zugeführt und durch diesen auf den Gegenstand (6) aufgewickelt sind und ferner mit dem Flyer (2) mindestens ein Hilfsarm (13 bzw.19) gekoppelt ist, der synchron mit dem Flyer (2) umläuft und der mit einer die Drähte (7) führenden Umlenkeinrichtung (15 bzw.20) versehen ist,
**dadurch gekennzeichnet**,
daß mindestens eine koaxial zur Drehachse des Hilfsarmes (13 bzw.19) drehbar gelagerte Zwischentrommel (11 bzw.18) vorgesehen ist, über die die Drähte (7) von einem feststehenden Magazin (25) zur Umlenkeinrichtung (15 bzw.20) geführt sind, wobei die Drähte (7) auf der Zwischentrommel (11 bzw.18) unter Krafteinwirkung von der Aufwickelstelle (28) zur Abwickelstelle (30) axial verschiebbar sind und daß der Umfang der Zwischentrommel (11 bzw.18) an der Abwickelstelle (30) kleiner als die jeweils bei einer Umdrehung des Flyers (2) auf den Gegenstand (6) aufgewickelte Drahtlänge ist.

2. Vorrichtung nach Anspruch 1,
**dadurch gekennzeichnet**,
daß die Zwischentrommel (11 bzw.18) eine an ihrem Außenumfang konisch verlaufende Trommelnabe (29) aufweist und die Drähte (7) im Bereich des größeren Nabendurchmessers von dem Magazin (25) auf die Zwischentrommel (11 bzw.18) aufgewickelt und im Bereich des kleineren Durchmessers mittels des Hilfsarmes (13 bzw.19) abgezogen sind.

3. Vorrichtung nach Anspruch 1 oder 2,
**dadurch gekennzeichnet**,
daß an der Umlenkeinrichtung für jeden Draht (7) eine Umlenkstelle (15 bzw.20) vorgesehen ist, wobei die Eintrittsstellen (16 bzw.21) für die einzelnen Drähte (7) axial gestaffelt angeordnet sind.

4. Vorrichtung nach Anspruch 3,
**dadurch gekennzeichnet**,
daß jede Umlenkstelle aus einer kreisbogenförmigen Umlenkbahn (15) bzw. einer drehbar gelagerten Umlenkrolle (20) besteht und die Umlenkbahnen (15) bzw. die Umlenkrolle (20) zueinander abgestufte Durchmesser aufweisen.

5. Vorrichtung nach Anspruch 1,2,3 oder 4,
**dadurch gekennzeichnet**,
daß über 360° gleichmäßig verteilt mehrere Hilfsarme (13 bzw.19) vorgesehen sind.

6. Vorrichtung nach einem oder mehreren der vorhergehenden Ansprüche, **dadurch gekennzeichnet**,
daß die Zwischentrommel (11 bzw.18) drehbar auf einem Verlängerungsstück (10 bzw.17) der Drehwelle (3) des Flyers (2) gelagert und der Hilfsarm (13 bzw.19) drehfest mit dem axial über die Zwischentrommel (11 bzw.18) herausgeführten Ende (12) des Verlängerungsstückes (10 bzw.17) verbunden ist.

7. Vorrichtung nach einem oder mehreren der Ansprüche 1 bis 5,
**dadurch gekennzeichnet**,
daß die Zwischentrommel (11 bzw.18) drehbar auf einem gesonderten, mit seinem einen Ende mit der Drehwelle (3) des Flyers (2) koppelbaren Wellenteil angeordnet und der Hilfsarm (13 bzw.19) fest mit dem anderen Ende des Wellenteiles verbunden ist.

## Claims

1. A multi-wire winding device for wrapping an object, in which the wires (7) are supplied, without twisting, to a flyer (2) rotating about the fixed object (6) and are wound onto the object (6) by means of said flyer (2) and, furthermore, at least one auxiliary arm (13 or 19), which rotates synchronously with the flyer (2), is coupled to the flyer (2), and which is provided with a deflection apparatus (15 or 20) guiding the wires (7), characterised in that at least one intermediate drum (11 or 18), pivotably mounted coaxially to the axis of rotation of the auxiliary arm (13 or 19) is provided, via which the wires (7) are guided from a fixed magazine (25) to the deflection apparatus (15 or 20), wherein the wires (7) are axially displaceable from the winding point (28) to the unwinding point (30) under the effect of a force and that the circumference of the intermediate drum (11 or 18) at the unwinding point (30) is smaller than the length of wire wound onto the object (6) during each rotation of the flyer (2).

2. A device according to claim 1, characterised in that the intermediate drum (11 or 18) has a conically-extending hub (29) at its outer periphery and the wires (7) are wound from the magazine (25) onto the intermediate drum (11 or 18) in the region of the larger hub diameter and are drawn off by means of the auxiliary arm (13 or 19) in the region of the smaller diameter.

3. A device according to claim 1 or 2, characterised in that a deflection point (15 or 20) is provided for each wire (7) on the deflection apparatus, wherein the entry points (16 or 21) for the individual wires (7) are arranged in an axially staggered manner.

4. A device according to claim 3, characterised in that each deflection point consists of an arc-shaped deflection path (15) or a pivotably mounted deflection roller (20) and the diameters of the deflection paths (15) and the deflection roller (20) are graduated with respect to one another.

5. A device according to claim 1, 2, 3 or 4, characterised in that several auxiliary arms (13 or 19) are provided, evenly distributed over 360°.

6. A device according to one or more of the preceding claims, characterised in that the intermediate drum (11 or 18) is pivotably mounted on an extension piece (10 or 17) of the rotating shaft (3) of the flyer (2) and the auxiliary arm (13 or 19) is connected, in a torsionally rigid manner, to the end of the extension piece (10 or 17) which is extended axially over the intermediate drum (11 or 18).

7. A device according to one or more of claims 1 to 5, characterised in that the intermediate drum (11 or 18) is pivotably arranged on a separate shaft portion, the end of which is couplable to the rotating shaft (3) of the flyer (2), and the auxiliary arm (13 or 19) is firmly connected to the other end of the shaft portion.

## Revendications

1. Dispositif d'enroulement pour enrouler plusieurs fils autour d'un objet, et dans lequel les fils (7) sont amenés sans torsion à un bobinot (2) qui tourne autour de l'objet fixe (6) et sont enroulés sur l'objet (6) au moyen de ce bobinot, et dans lequel, en outre, au bobinot (2) est accouplé au moins un bras auxiliaire (13 ou 19) qui tourne en synchronisme avec le bobinot (2) et est équipé d'un dispositif de déviation (15 ou 20) qui guide les fils (7),
caractérisé par le fait qu'il est prévu au moins un tambour intermédiaire (11 ou 18) qui est monté de manière à pouvoir tourner coaxialement à l'axe de rotation du bras auxiliaire (13 ou 19) et au moyen duquel les fils (7) sont guidés depuis un magasin fixe (25) jusqu'au dispositif de renvoi (15 ou 20), les fils (7) étant déplaçables axialement sur le tambour intermédiaire (11 ou 18), sous l'action d'une force dirigée du point d'enroulement (28) au point de dévidage (30), et que la circonférence du tambour intermédiaire (11 ou 18) au niveau du point de dévidage (30) est inférieure à la longueur de fil enroulé sur l'objet (6) respectivement lors d'une rotation du bobinot (2).

2. Dispositif suivant la revendication 1, caractérisé par le fait que le tambour intermédiaire (11 ou 18) possède un moyeu (29) qui présente une forme conique au niveau de sa périphérie extérieure et que les fils (7) sont enroulés sur le tambour intermédiaire (11 ou 18), dans la zone du diamètre supérieur du moyeu, à partir du magasin (25), et sont tirés, dans la zone de diamètre le plus faible, au moyen du bras auxiliaire (13 ou 19).

3. Dispositif suivant la revendication 1 ou 2, caractérisé par le fait que sur le dispositif de renvoi est prévu, pour chaque fil (7), un point de renvoi (15 ou 20), les points d'entrée (16 ou 21) pour les différents fils (7) étant disposés en étant échelonnés axialement.

4. Dispositif suivant la revendication 3, caractérisé par le fait que chaque point de renvoi est constitué par une piste de renvoi (15) en forme d'arc de cercle ou un galet de renvoi (20) monté rotatif et que les pistes de renvoi (15) ou le galet de renvoi (20) possèdent des diamètres étagés entre eux.

5. Dispositif suivant la revendication 1, 2, 3 ou 4, caractérisé par le fait qu'il est prévu plusieurs bras auxiliaires (13 ou 19) répartis uniformément sur 360°.

6. Dispositif suivant une ou plusieurs des revendications précédentes, caractérisé par le fait que le tambour intermédiaire (11 ou 18) est monté de manière à pouvoir tourner sur un prolongement (10 ou 17) de l'arbre rotatif (3) du bobinot (2) et que le bras auxilaire (13 ou 19) est relié, avec blocage en rotation, à l'extrémité (12) du prolongement (10 ou 17) qui s'étend axialement au-delà du tambour intermédiaire (11 ou 18).

7. Dispositif suivant une ou plusieurs des revendications 1 à 7, caractérisé par le fait que le tambour intermédiaire (11 ou 18) est monté de manière à pouvoir tourner sur un bout d'arbre particulier, pouvant être accouplé par l'une de ses extrémités à l'arbre rotatif (3) du bobinot (2), et que le bras auxiliaire (13 ou 19) est relié de façon fixe à l'autre extrémité du bout d'arbre.
